# EUROPÄISCHE PATENTSCHRIFT

(11) **EP 0 446 454 B1**
(45) Veröffentlichungstag und Bekanntmachung des Hinweises auf die Patenterteilung: **10.11.1993**
(21) Anmeldenummer: 90124335.2
(22) Anmeldetag: 15.12.1990
(51) Int. Cl.: F04B 21/02

(54) **Druckmittelfördereinrichtung mit einer Hubkolbenpumpe**
Pump installation with a piston pump
Installation de pompage avec une pompe à piston

(30) Priorität: 03.03.1990 DE 4006758; 12.09.1990 DE 4028941
(43) Veröffentlichungstag der Anmeldung: 18.09.1991
(73) Patentinhaber: ROBERT BOSCH GMBH, 70442 Stuttgart (DE)
(72) Erfinder: Klose, Michael, Dipl.-Ing., W-7122 Besigheim 3 (DE); Hummel, Rolf, Dipl.-Ing., W-7031 Steinenbronn (DE); Schuller, Wolfgang, W-7120 Bietigheim-Bissingen (DE); Krenz, Günter, Dipl.-Ing. (FH), W-7141 Steinheim (DE); Feeser, Hans, W-7143 Vaihingen/Enz-Aurich (DE)

(56) Entgegenhaltungen:
- DE-A- 3 907 969
- DE-B- 1 105 674
- US-A- 3 238 887
- US-A- 3 310 000

## Beschreibung

### Stand der Technik

Es ist schon eine Druckmittelfördereinrichtung bekannt (DE-A- 39 07 969), bei der vom relativ kleinvolumigen Hohlraum des Gehäuses eines Auslaßventiles mit einer Kugel als Ventilschließkörper wenigstens zwei diametral gegenüberliegende Auslaßbohrungen eines Auslaßkanals für Druckmittel in eine Kammer eines Pumpengehäuses führen. Diese Kammer ist relativ großvolumig und stromabwärts durch eine Drosselbohrung mit einer Druckmittelleitung verbunden. Mit dieser Ausgestaltung wird aufgrund der Kompressibilität des Druckmittels in der Kammer und der Elastizität der die Kammer begrenzenden Pumpengehäusewände eine Dämpfung der Pulsationen des von der Hubkolbenpumpe ungleichförmig ausgestoßenen Druckmittelstromes erzielt. Dennoch befriedigt die bekannte Druckmittelfördereinrichtung hinsichtlich ihres Geräuschverhaltens nicht völlig, weil das Öffnen des Auslaßventils beim Förderhub der Hubkolbenpumpe schlagartig bis zum vollen Ventilöffnungsquerschnitt erfolgt. Dadurch kommt es neben Kompressionsschlägen zu plötzlichen Kraftänderungen im Antriebsstrang der Hubkolbenpumpe mit der Folge von Geräuschemission, die sich als Körperschall auf die Druckmittelfördereinrichtung tragende Bauteile, z. B. eines Kraftfahrzeugs, fortpflanzt und schwierig zu dämpfen ist.

### Vorteile der Erfindung

Die erfindungsgemäße Druckmittelfördereinrichtung mit den kennzeichnenden Merkmalen des Hauptanspruchs hat demgegenüber den Vorteil, daß hierdurch eine Änderung der Öffnungscharakteristik des Auslaßventils erreicht wird, aufgrund der eine geringere Gerauschentwicklung in der Hubkolbenpumpe auftritt. Das Ventilschließglied des Auslaßventils führt nämlich beim Öffnen eine Kipp- oder Klappbewegung aus, bei der sich gegen die Auslaßöffnung ein Öffnungsspalt zwischen dem Ventilsitz und dem Ventilschließglied auftut, aus dem das Druckmittel mit relativ langsam ansteigenden Förderstrom in den Auslaßkanal übertritt. Demzufolge kommt es zu einer verlangsamten Kraftanderungsgeschwindigkeit im Antriebsstrang der Hubkolbenpumpe und einer verringerten Körperschall- sowie Luftschallemission. Außerdem wird ein sicheres Finden und Zentrieren des Ventilschließkörpers in den Ventilsitz erzielt, insbesondere wenn es sich um einen solchen mit kegeliger Sitzfläche handelt. Es werden nämlich das Finden in den Ventilsitz verhindernde Fluchtungsfehler vermieden, wenn der eine Zentrierfunktion auf das Ventilschließglied ausübende, ventilsitzseitige Hohlraum und der Ventilsitz in einem Bauteil vereinigt und üblicherweise spanabhebend in einer Aufspannung gefertigt werden.

Durch die in den Unteransprüchen aufgeführten Maßnahmen sind vorteilhafte Weiterbildungen und Verbesserungen der im Hauptanspruch angegebenen Druckmittelfördereinrichtung möglich.

Besonders vorteilhaft ist die Ausgestaltung gemäß Anspruch 2, weil sich hier wegen der günstigen Abströmung des Druckmittels aus dem Ventilöffnungsquerschnitt eine sehr wirkungsvolle Geräuschminderung erzielen läßt.

In den Ansprüchen 3, 4 und 5 sind Weiterbildungen der Druckmittelfördereinrichtung angegeben, bei denen unter Verwendung unterschiedlicher Formen von Ventilschließgliedern eine günstige Öffnungscharakteristik des Auslaßventils erreicht wird.

Mit der im Anspruch 6 angegebenen Beziehung der Abmessungen von Hohlraum und Auslaßbohrung ist eine Lehre offenbart, anhand der z. B. durch die Größe der Schließfeder im Hohlraum oder durch einen vorgegebenen Durchmesser der Auslaßbohrung erforderliche konstruktive Abwandlungen des Auslaßventils möglich sind und trotzdem eine erhebliche Reduzierung der Geräuschemission erzielbar ist.

Ebenfalls von Vorteil ist die Weiterbildung gemäß Anspruch 7, weil hierdurch günstige strömungsdynamische Verhältnisse erzielbar sind, welche die Geräuschemission vermindern.

Die im Anspruch 8 angegebene Maßnahme hat den Vorteil, daß die Öffnungsbewegung des Ventilschließkörpers zusätzlich verlangsamt wird, weil das Ventilschließglied zusammen mit dem Hohlraum wie ein hydraulisches Dämpfungselement mit dem Spalt als Drossel wirkt. Dadurch kann die Geräuschminderung noch wirkungsvoller gemacht werden.

Die im Anspruch 9 offenbarte Weiterbildung der Druckmittelfördereinrichtung erlaubt es auf einfache Weise, durch entsprechende Gestaltung des Auslaßventilgehäuses, das Volumen des Hohlraumes zu variieren, um je nach den Anforderungen unterschiedliche Dämpfungscharakteristiken zu erzielen.

### Zeichnung

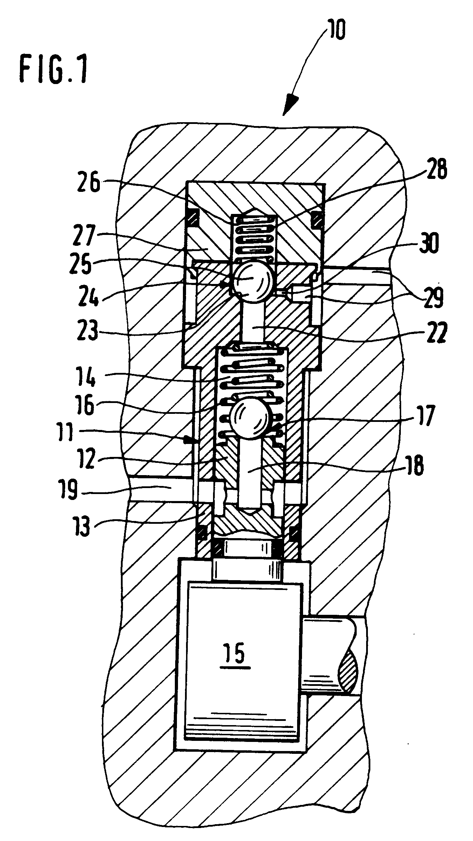

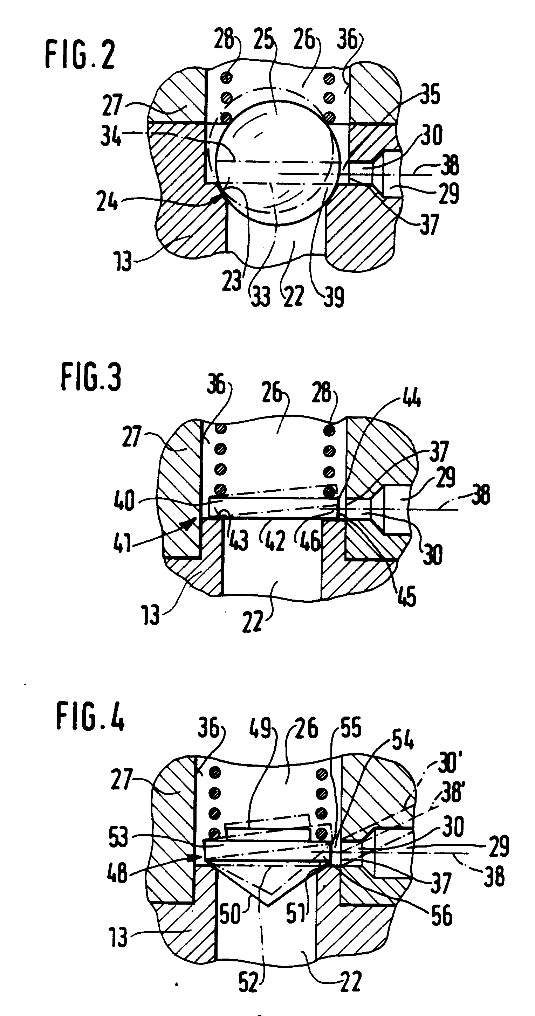

Drei Ausführungsbeispiele der Erfindung sind in der Zeichnung vereinfacht dargestellt und in der nachfolgenden Beschreibung näher erläutert. Es zeigen Figur 1 einen Längsschnitt einer Druckmittelfördereinrichtung mit einer Hubkolbenpumpe mit einem Auslaßventil, von dessen mit einer Kugel als Ventilschließglied zusammenwirkendem Ventilsitz seitlich eine Auslaßbohrung abzweigt, als erstes Ausführungsbeispiel, Figur 2 eine vergrößerte Schnittdarstellung des Auslaßventils nach Figur 1, Figur 3 ein Auslaßventil mit einer Platte als Ventilschließglied in Darstellung entsprechend Figur 2, als zweites Ausführungsbeispiel, und Figur 4 ein Auslaßventil mit einem Ventilschließglied in Kegelform, ebenfalls in vergrößerter Schnittdarstellung, als drittes Ausführungsbeispiel.

### Beschreibung der Ausführungsbeispiele

Die in Figur 1 dargestellte Druckmittelfördereinrichtung 10 weist eine Hubkolbenpumpe 11 auf. Die Hubkolbenpumpe 11 besitzt einen Pumpenkolben 12, welcher in einem Pumpenzylinder 13 mit einem Verdrängerraum 14 längsverschiebbar geführt ist. Der Pumpenkolben 12 ist durch einen Exzenter 15 entgegen der Kraft einer im Verdrängerraum 14 angeordneten Druckfeder 16 antreibbar. Mit dem Pumpenkolben 12 wirkt ein im Verdrängerraum 14 angeordnetes Einlaßventil 17 zusammen. Im Pumpenkolben 12 befindet sich ein längsverlaufender Ansaugkanal 18, welcher mit einem Einlaßkanal 19 für Druckmittel in Verbindung steht.

Gleichachsig zum Pumpenzylinder 13 verlaufend geht vom Verdrängerraum 14 eine Abströmbohrung 22 aus, die in einem ringförmigen Ventilsitz 23 eines Auslaßventils 24 endet. Mit dem Ventilsitz 23 wirkt eine Kugel 25 als Ventilschließkörper zusammen. Die Kugel 25 ist in einem Hohlraum 26 kreiszylindrischen Querschnitts aufgenommen, der sich gleichachsig zur Pumpenlängsachse vom Ventilsitz 23 ausgehend im Pumpenzylinder 13 erstreckt. Der Hohlraum 26 ist auf der vom Exzenter 15 abgewandten Seite des Pumpenzylinders 13 in einem an diesen angefügten Zylinderkopf 27 gleichachsig fortgesetzt. Auf der vom Ventilsitz 23 abgewandten Seite ist im Hohlraum 26 eine Schließfeder 28 aufgenommen, welche die Kugel 25 gegen den Ventilsitz 23 belastet. Vom Hohlraum 26 zweigt stromabwärts des Ventilsitzes 23 eine mit einem Auslaßkanal 29 für Druckmittel in Verbindung stehende Auslaßbohrung 30 seitlich ab.

Die Druckmittelfördereinrichtung 10 ist Teil einer nicht dargestellten hydraulischen Kraftfahrzeug-Bremsanlage mit Antiblockiersystem und/oder Antriebsschlupfregelsystem.

Die Druckmittelfördereinrichtung 10 hat im wesentlichen folgende Wirkungsweise:

Beim Abwärtshub des Pumpenkolbens 12 öffnet das Einlaßventil 17 und Druckmittel wird durch den Einlaßkanal 19 und den Ansaugkanal 18 im Verdrängerraum 14 aufgenommen. Während dieses Ansaughubes ist das Auslaßventil 24 geschlossen. Beim Aufwärtshub (Arbeitshub) des Pumpenkolbens 12 ist dagegen das Einlaßventil 17 geschlossen und Druckmittel wird aus dem Verdrängerraum 14 durch die Abströmbohrung 22 unter Überwindung des Auslaßventils 24 durch die Auslaßbohrung 30 in den Auslaßkanal 29 ausgeschoben. Dabei wird die Öffnungscharakteristik des Auslaßventils 24 durch die nachfolgend beschriebenen Maßnahmen beeinflußt:

Bei dem in Figur 2 als vergrößerte Einzelheit des in Figur 1 wiedergegebenen ersten Ausführungsbeispiels der Druckmittelfördereinrichtung 10 dargestellten Auslaßventil 24 ist die hohlraumseitige Begrenzung des Ventilsitzes 23 durch eine quer zur Pumpenlängsachse verlaufende Ebene 33 ersichtlich. Die am Ventilsitz 23 unter der Wirkung der Schließfeder 28 angreifende Kugel 25 hat einen parallel zur Ebene 33 des Ventilsitzes 23 verlaufenden Kugelgroßkreis 34. Dieser begrenzt gegen den Hohlraum 26 einen Spalt 35 zwischen der Kugel 25 und dem Innenumfang 36 des Hohlraums 26. Die radial vom Hohlraum 26 abzweigende Auslaßbohrung 30 ist derart angeordnet, daß sich die hohlraumseitige Öffnung 37 zwischen der Ebene 33 des Ventilsitzes 23 und dem Kugelgroßkreis 34 erstreckt, an dem der Spalt 35 seinen geringsten Querschnitt hat. Die Längsachse 38 der Auslaßbohrung 30 verläuft somit zwischen der Ebene 33 und dem Kugelgroßkreis 34.

Die radiale Breite des Spaltes 35 zwischen der Kugel 25 und dem Innenumfang 36 des Hohlraumes 26 ist von wesentlicher Bedeutung für die Dämpfung der Öffnungsbewegung der Kugel. Die minimale radiale Breite des Spaltes 35 kann zwischen 1/100 bis 5/100 des Kugeldurchmessers betragen, vorzugsweise eine Breite von 2/100 des Kugeldurchmessers aufweisen, was bei einer Kugel mit 5 mm Durchmesser 0,1 mm beträgt. (In der Zeichnung ist der Spalt 35 übertrieben breit gezeichnet.) Ein derartiger Spalt 35 wirkt beim Schließen des Auslaßventils 24 zentrierend auf die Kugel 25. Fluchtungsfehler zwischen dem Ventilsitz 23 und dem Innenumfang 36 des Hohlraums 26 würden daher das Finden der Kugel 25 auf den Ventilsitz 23 und das Zentrieren in diesem beim Schließvorgang des Auslaßventils 24 behindern. Ein ventilsitzseitiger Teil des Hohlraums 26 ist daher ebenso wie der Ventilsitz 23 im Pumpenzylinder 13 angeordnet. Dieser Teil des Hohlraumes 6, der sich axial bis über den Kugelgroßkreis 34 erstreckt, kann daher zusammen mit dem Ventilsitz 23 in der gleichen Aufspannung, z. B. in einem Drehautomaten, spanabhebend bearbeitet werden, was Fluchtfehler vermeidet. Im übrigen ist der die Schließfeder 28 aufnehmende Teil des Hohlraums 26 im Zylinderkopf 27 gelegen.

Aufgrund der zur Pumpenlängsachse unsymmetrischen Anordnung der Öffnung 37 der einzigen Auslaßbohrung 30 führt die Kugel 25 beim Arbeitshub des Pumpenkolbens 12 eine Öffnungsbewegung aus, bei der die Kugel, ausgehend vom Bereich der Auslaßbohrung 30 vom Ventilsitz 23 abhebt und einen bezüglich des Ventilsitzumfanges ungleichförmigen Öffnungsspalt 39 bildet, aber am von der Öffnung 37 der Auslaßbohrung 30 abgewandten Bereich des Ventilsitzes 23 abgestützt bleibt. Dabei nimmt die Kugel 25 eine strichpunktiert angedeutete Öffnungsstellung ein. Da die Auslaßbohrung 30 eine Drosselstelle für das Druckmittel bildet, deren Querschnittsfläche auf die kleinste radiale Breite des Spaltes 35 und/oder auf das Druckmittelaufnahmevolumen des Hohlraumes 26 abgestimmt ist, wird die Kippbewegung der Kugel 25 in ihre Öffnungsstellung gedämpft. Die Bewegungsdämpfung ist besonders wirksam, wenn der Spalt 35 und/oder das Druckmittelaufnahmevolumen des Hohlraumes 26 sehr klein sind. Ein sehr schmaler Spalt 35 und/oder ein kleines Druckmittelaufnahmevolumen erlauben einen großen Querschnitt der Auslaßbohrung 30. Umgekehrt kann die geminderte Dämpfungswirkung eines breiteren Spaltes 35 und/oder eines Hohlraumes 26 mit größerem Druckmittelaufnahmevolumen durch eine Auslaßbohrung 30 geringen Querschnitts ausgeglichen werden. Die Bewegungsdämpfung der Kugel 25 beim Öffnungsvorgang hat zur Folge, daß der Druckmittelstrom durch die Auslaßbohrung 30 relativ langsam ansteigt, was eine verlangsamte Kraftänderungsgeschwindigkeit im Antriebsstrang der Hubkolbenpumpe 11 zur Folge hat. Eine Körperschallemission tritt daher in vermindertem Umfang auf.

Das in Figur 3 dargestellte zweite Ausführungsbeispiel der Druckmittelfördereinrichtung unterscheidet sich vom ersten im wesentlichen dadurch, daß eine parallelbegrenzte, kreisförmige Platte 40 als Ventilschließkörper des Auslaßventils 41 verwendet ist. In Schließstellung des Auslaßventils 41 fällt die Ebene 42 des Ventilsitzes 43 mit der Unterseite der Platte 40 zusammen. Die hohlraumseitige Öffnung 37 der Auslaßbohrung 30 erstreckt sich zwischen dieser Ebene 42 und der eine schließfederseitige Umlaufkante 44 bildende Oberseite der Platte 40. Somit geht die Öffnung 37 nicht über den Spalt 45 zwischen dem Innenumfang 36 des Hohlraumes 26 und der Platte 40 hinaus. Außerdem ist der Hohlraum 26 vom Zylinderkopf 27 gebildet. Er kann jedoch auch, wie beim ersten Ausführungsbeispiel, teils im Pumpenzylinder 13 und teils im Zylinderkopf 27 verwirklicht sein.

Beim Arbeitshub des Pumpenkolbens 12 führt die Platte 40 eine Öffnungsbewegung ähnlich einer Klappe aus. In ihrer mit strichpunktierten Linien angegebenen Öffnungsstellung bildet sie einen gegen die Auslaßbohrung 30 gerichteten Öffnungsspalt 46, in den die Längsachse 38 der Auslaßbohrung 30 zielt.

Bei dem in Figur 4 dargestellten dritten Ausführungsbeispiel besitzt das Auslaßventil 48 der Druckmittelfördereinrichtung einen im wesentlichen als Kegel 49 ausgebildeten Ventilschließkörper mit einer kegelförmigen Dichtfläche 50. Der passend ausgebildete Ventilsitz 51 des Auslaßventils 48 ist gegen den Hohlraum 26 durch eine Ebene 52 begrenzt. Von der kegelförmigen Dichtfläche 50 ausgehend ist der Ventilschließkörper 49 in einen zylindrischen Abschnitt 53 fortgesetzt, welcher mit dem Innenumfang 36 des Hohlraumes 26 einen Spalt 54 bildet. Die hohlraumseitige Öffnung 37 der Auslaßbohrung 30 erstreckt sich auch bei diesem Ausführungsbeispiel zwischen der Ebene 52 des Ventilsitzes 51 und dem Ende des durch eine schließfederseitige Umlaufkante 55 des zylindrischen Ventilschließkörperabschnitts 53 begrenzten Spaltes 54. Der vom Zylinderkopf 27 gebildete Hohlraum 26 kann auch hier teils im Pumpenzylinder 13 und teils im Zylinderkopf verwirklicht sein.

Beim Arbeitshub des Pumpenkolbens 12 geht der als Ventilschließkörper dienende Kegel 49 in eine Öffnungsstellung (strichpunktierte Linien) über, in welcher der Öffnungsspalt 56 zwischen dem Ventilsitz 51 und dem Kegel 49 im Bereich der Auslaßbohrung 30 seinen größten Querschnitt hat.

Abweichend von den drei Ausführungsbeispielen kann die Auslaßbohrung auch unter einem spitzen Winkel, d. h. einem Winkel zwischen 0° und 90°, zur Ebene des Ventilsitzes verlaufen. Dies ist beim Ausführungsbeispiel nach Figur 4 mit strichpunktierten Linien dargestellt, wo die Längsachse 38' der Auslaßbohrung 30' einen Winkel von etwa 30° mit der den Ventilsitz 51 begrenzenden Ebene 52 einnimmt. Dieser Verlauf kann ebenso bei den übrigen Ausführungsbeispielen verwirklicht werden.

## Patentansprüche

1. Druckmittelfördereinrichtung (10) mit einer Hubkolbenpumpe (11) mit den Merkmalen:
Die Hubkolbenpumpe (11) hat einen antreibbaren Pumpenkolben (12), der in einem Pumpenzylinder (13) mit einem Verdrängerraum (14) längsverschiebbar geführt ist,
an den Verdrangerraum (14) ist ein Auslaßventil (24: 41; 48) angeschlossen,
gleichachsig zum Pumpenzylinder (13) ist ein Hohlraum (26) zur Aufnahme eines an einem Ventilsitz (23; 43; 51) des Auslaßventils (24; 41; 48) angreifenden Ventilschließkörpers (25; 40; 49) sowie einer den Ventilschließkörper gegen den Ventilsitz belastenden Schließfeder (28) vorgesehen,
der Hohlraum (26) ist stromabwärts des Ventilsitzes (23; 43; 51) mit einem Auslaßkanal (29) für Druckmittel verbunden,
gekennzeichnet durch die folgenden Merkmale:
der vom Ventilsitz (23; 43; 51) ausgehende Hohlraum (26) erstreckt sich innerhalb des Pumpenzylinders (13) wenigstens bis zum Spalt (35; 45; 54) geringsten Querschnitts, welcher zwischen dem Ventilschließkörper (25; 40; 49) und dem Innenumfang (36) des Hohlraumes (26) gebildet ist,
vom Hohlraum (26) zweigt lediglich eine, vom Umfangsbereich des Ventilsitzes (23; 43; 51) wenigstens annahernd radial ausgehende Auslaßbohrung (30) zum Auslaßkanal (29) ab,
die hohlraumseitige Öffnung (37) der Auslaßbohrung (30) erstreckt sich wenigstens annahernd zwischen dem Ventilsitz (23; 43; 51) und dem schließfederseitigen Ende des Spaltes (35; 45; 54) geringsten Querschnitts.

2. Druckimittelfördereinrichtung nach Anspruch 1, dadurch gekennzeichnet, daß die Auslaßbohrung (30) mit ihrer Öffnung (37) vorzugsweise an eine Ebene (33; 42; 52) angrenzt, welche den Ventilsitz (23; 43; 51) schließfederseitig begrenzt, und mit ihrer Längsachse (38) in einen vom Ventilsitz (23; 43; 51) und Ventilschließkörper (25; 40; 49) gebildeten Öffnungsspalt (39; 45: 56) zielt.

3. Druckmittelfördereinrichtung nach Anspruch 1, dadurch gekennzeichnet, daß bei einem Ventilschließkörper in Form einer Kugel (25) sich die Öffnung (37) der Auslaßbohrung (30) bis höchstens zum parallel zum Ventilsitz (23) verlaufenden Kugelgroßkreis (34) erstreckt.

4. Druckmittelfördereinrichtung nach Anspruch 1, dadurch gekennzeichnet, daß bei einem als parallel begrenzte Platte (40) ausgebildeten Ventilschließkörper sich die Öffnung (37) der Auslaßbohrung (30) bis höchstens zur schließfederseitigen Umlaufkante (44) der Platte erstreckt.

5. Druckmittelfördereinrichtung nach Anspruch 1, dadurch gekennzeichnet, daß bei einem Ventilschließkörper in Form eines Kegels (49) mit an eine kegelförmige Dichtflache (50) schließfederseitig folgendem zylindrischem Abschnitt (53) sich die Öffnung (37) der Auslaßbohrung (30) bis höchstens zur schließfederseitigen Umlaufkante (55) dieses Abschnitts (53) erstreckt.

6. Druckmittelfördereinrichtung nach Anspruch 1, dadurch gekennzeichnet, daß die Auslaßbohrung (30) eine Drosselstelle bildet, deren Querschnittsfläche auf die Breite des Spaltes (35; 45; 54) und/oder auf das Druckmittelaufnahmevolumen des Hohlraumes (26) in dem Sinn abgestimmt ist, daß eine kleine radiale Breite des Spaltes und/oder ein kleines Druckmittelaufnahmevolumen eine große Querschnittsfläche der Auslaßbohrung (30) zuläßt und umgekehrt.

7. Druckmittelfördereinrichtung nach einem der Ansprüche 1 bis 6, dadurch gekennzeichnet, daß die Auslaßbohrung (30') mit ihrer Längsachse (38') einen Winkel zur Ebene (33; 42; 52) des Ventilsitzes (23; 43; 51) einschließt, der zwischen 0° und 90° liegt.

8. Druckmittelfördereinrichtung nach Anspruch 1, dadurch gekennzeichnet, daß der Spalt (35; 45; 54) eine radiale Breite von 1/100 bis 5/100, vorzugsweise von 2/100 des Durchmessers des Ventilschließkörpers (25; 40; 49) hat.

9. Druckmittelfördereinrichtung nach Anspruch 1, dadurch gekennzeichnet, daß der Hohlraum (26) in einem den Pumpenzylinder (13) auslaßventilseitig abschließenden Zylinderkopf (27) fortgesetzt ist.

## Claims

1. Pressure-medium feed device (10) having a reciprocating piston pump (11) and exhibiting the following features:
the reciprocating piston pump (11) has a driveable pump piston (12), which is guided in a longitudinally displaceable manner in a pump cylinder (13) having a displacement chamber (14),
connected to the displacement chamber (14) is an outlet valve (24; 41; 48),
coaxially to the pump cylinder (13) there is provided a cavity (26) for the reception of valve-closing element (25; 40; 49) acting upon a valve seat (23; 43, 51) of the outlet valve (24; 41; 48) and for the reception of a closing spring (28) pressurising the valve closing element against the valve seat,
the cavity (26) is connected, downstream from the valve seat (23; 43; 51), to an outlet duct (29) for pressure medium,
characterised by the following features:
the cavity (26) departing from the valve seat (23; 43; 51) extends within the pump cylinder (13) at least up to the gap (35; 45; 54) of smallest cross-section, which gap is formed between the valve-closing element (25; 40; 49) and the inner periphery (36) of the cavity (26),
branching off laterally from the cavity (26) to the outlet duct (29) is merely one outlet bore (30), which departs at least approximately radially from the peripheral region of the valve seat (23; 43; 51),
the cavity-side opening (37) of the outlet bore (30) extends at least approximately between the valve seat (23; 43; 51) and the closing spring-side end of the gap (35; 45; 54) of smallest diameter.

2. Pressure-medium feed device according to Claim 1, characterised in that the outlet bore (30) preferably adjoins with its opening (37) a plane (33; 42; 52) which limits the valve seat (23; 43; 51) on the closing-spring side and aims with its longitudinal axis (38) into an opening gap (39; 45; 56) formed by the valve seat (23; 43; 51) and the valve-closing element (25; 40; 49).

3. Pressure-medium feed device according to Claim 1, characterised in that, in the case of a valve-closing element in the form of a ball (25), the opening (37) of the outlet bore (30) extends at most up to the great circle (34) running parallel to the valve seat (23).

4. Pressure-medium feed device according to Claim 1, characterised in that, in the case of a valve-closing element configured as a parallel-limited plate (40), the opening (37) of the outlet bore (30) extends at most up to the closing spring-side circumferential edge (44) of the plate.

5. Pressure-medium feed device according to Claim 1, characterised in that, in the case of a valve-closing element in the form of a cone (49) having a cylindrical section (53) following, on the closing-spring side, a conical sealing surface (50), the opening (37) of the outlet bore (30) extends at most up to the closing spring-side circumferential edge (55) of the said section (53).

6. Pressure-medium feed device according to Claim 1, characterised in that the outlet bore (30) forms a choke point, the cross-sectional area of which is matched to the width of the gap (35; 45; 54) and/or to the pressure-medium reception capacity of the cavity (26), to the effect that a small radial width of the gap and/or a small pressure-medium reception capacity allows a large cross-sectional area of the outlet bore (30) and vice versa.

7. Pressure-medium feed device according to one of Claims 1 to 6, characterised in that the outlet bore (30') encloses with its longitudinal axis (38') an angle to the plane (33; 42; 52) of the valve seat (23; 43; 51) which lies between 0° and 90°.

8. Pressure-medium feed device according to Claim 1, characterised in that the gap (35; 45; 54) has a radial width of 1/100 to 5/100, preferably 2/100, of the diameter of the valve-closing element (25; 40; 49).

9. Pressure-medium feed device according to Claim 1, characterised in that the cavity (26) is continued in a cylinder head (27) which closes off the pump cylinder (13) on the outlet-valve side.

## Revendications

1. Installation de pompage (10) avec une pompe à piston alternatif (11) présentant les particularités suivantes :
- la pompe à piston alternatif (11) a un piston de pompe (12) pouvant être entraîné qui est guidé dans un cylindre de pompe (13) avec une chambre volumétrique (14) de façon à pouvoir coulisser longitudinalement,
- sur la chambre volumétrique (14) est raccordée une soupape de sortie (24, 41, 48),
- on prévoit coaxialement au cylindre de pompe (13) un espace creux (26) servant à recevoir un corps de fermeture de la soupape (25, 40, 49) venant en appui sur un siège de soupape (23, 43, 51) de la soupape de sortie (24, 41, 48) ainsi qu'un ressort de fermeture (28) comprimant le corps de fermeture de la soupape contre le siège de la soupape,
- l'espace creux (26) est relié en aval du siège de soupape (23, 43, 51) à un canal de sortie (29) pour ce fluide sous pression,
l'installation de pompage est caractérisée par les particularités suivantes :
- l'espace creux (26) partant du siège de la soupape (23, 43, 51) s'étend à l'intérieur du cylindre de la pompe (13) au moins jusqu'à la fente (35, 45, 54) présentant la plus petite section transversale, qui est formée entre le corps de fermeture de la soupape (25, 40, 49) et le pourtour intérieur (36) de l'espace creux (26),
- à partir de l'espace creux (26) part en dérivation uniquement un alésage de sortie (30) via le canal de sortie (29) alésage qui s'étend radialement du moins approximativement, depuis la zone périphérique du siège de soupape (23, 43, 51),
- l'ouverture (37), de l'alésage de sortie (30) située du côté de l'espace creux s'étend au moins approximativement entre le siège de la soupape (23, 43, 51) et l'extrémité située du côté du ressort de fermeture, de la fente (35, 45, 54) de plus petite section transversale.

2. Installation de pompage selon la revendication 1, caractérisée en ce que l'alésage de sortie (30) est adjacent par son ouverture (37 de préférence à un plan (32, 42, 52) qui délimite le siège de la soupape (23, 43, 51) du côté du ressort de fermeture le tend par son axe longitudinal (38) dans une fente d'ouverture (39, 45, 56) formée par le siège de la soupape (23, 43, 51) et le corps de fermeture de la soupape (25, 40, 49).

3. Installation de pompage selon la revendication 1, caractérisée en ce que dans le cas d'un corps de fermeture de la soupape ayant la forme d'une bille (25), l'ouverture (37) de l'alésage de sortie (30) s'étend au maximum jusqu'au grand cercle de la bille (34) s'étendant en parallèle au siège de la soupape (23).

4. Installation de pompage selon la revendication 1, caractérisé en ce que dans le cas d'un corps de fermeture de la soupape formé comme une plaque (40) délimite en parallèle l'ouverture (37) de l'alésage de sortie (30) s'étend au maximum jusqu'au bord périphérique (44) de la plaque située du côté du ressort de fermeture.

5. Installation de pompage selon la revendication 1, caractérisée en ce que dans le cas d'un corps de fermeture de la soupape ayant la forme d'un cône (49) avec une section (53) cylindrique faisant suite du côté du ressort de fermeture a une surface d'étanchéité en forme de cône (50), l'ouverture (37) de l'alésage de sortie (30) s'étend au plus jusqu'au bord périphérique (55) de cette section (53) situé du côté du ressort de fermeture.

6. Installation de pompage selon la revendication 1, caractérisée en ce que l'alésage de sortie (3o) forme un endroit étranglé dont la surface de la section transversale est déterminée en fonction de la largeur de la fente (35, 45, 54) et/ou du volume de recueillement de fluide sous pression de l'espace creux (26) dans le sens qu'une petite largeur radiale de la fente et/ou un petit volume de recueillement de fluide sous pression laisse une grande surface de section transversale de l'alésage de sortie (30) et inversement.

7. Installation de pompage selon l'une des revendications 1 à 6, caractérisée en ce que l'alésage de sortie (30') forme par son axe longitudinal (38') un angle par rapport au plan (33, 42, 52) du siège de la soupape (23, 43, 51) qui se situe entre 0° et 90.

8. Installation de pompage selon la revendication 1, caractérisée en ce que la fente ( 35, 45, 54) a une largeur de 1/100^{ème} à 5/100^{ème} de préférence 2/100^{ème} du diamètre du corps de fermeture de la soupape (25, 40, 49).

9. Installation de pompage selon la revendication 1, caractérisée en ce que le corps creux (26) se prolonge dans une culasse (27) fermant le cylindre de la pompe (13) du côté de la soupape de sortie.
